Europäisches Patentamt

European Patent Office

Office européen des brevets

(19)

(11) EP 0 681 690 B1

(12) **FASCICULE DE BREVET EUROPEEN**

(45) Date de publication et mention
de la délivrance du brevet:
**30.09.1998 Bulletin 1998/40**

(21) Numéro de dépôt: **95902171.8**

(22) Date de dépôt: **24.11.1994**

(51) Int Cl.[6]: **G01L 3/10**, G01L 5/22

(86) Numéro de dépôt international:
**PCT/FR94/01369**

(87) Numéro de publication internationale:
**WO 95/14914 (01.06.1995 Gazette 1995/23)**

(54) **DISPOSITIF DE MESURE DIFFERENTIELLE DE COUPLE**

MESSVORRICHTUNG ZUR DIFFERENTIELLEN MESSUNG VON MOMENTEN

DIFFERENTIAL TORQUE MEASUREMENT DEVICE

(84) Etats contractants désignés:
**DE GB IT**

(30) Priorité: **26.11.1993 FR 9314168**

(43) Date de publication de la demande:
**15.11.1995 Bulletin 1995/46**

(73) Titulaire: **LABINAL
78190 Montigny-le-Bretonneux (FR)**

(72) Inventeurs:
• **LEMARQUAND, Valérie, Evelyne
F-74370 Villaz (FR)**
• **LEMARQUAND, Guy, Pierre, Raymond, Lucien
F-74370 Villaz (FR)**

(74) Mandataire: **Bernasconi, Jean et al
c/o Cabinet Lavoix,
2, Place d'Estienne d'Orves
75441 Paris Cédex (FR)**

(56) Documents cités:
DE-A- 3 532 351          FR-A- 2 612 633
FR-A- 2 689 633          US-A- 4 984 474

• **JOURNAL OF MAGNETISM AND MAGNETIC
MATERIALS, vol.104-107, Février 1992,
AMSTERDAM (NL) pages 1109 - 1110,
XP000329324 V. LEMARQUAND ET AL. 'NEW
STRUCTURE OF MAGNETIC TORQUE SENSOR'
cité dans la demande**
• **PATENT ABSTRACTS OF JAPAN vol. 8, no. 1
(P-246) (1438) 6 Janvier 1984 & JP,A,58 167 934
(TATEISHI DENKI K.K.) 4 Octobre 1983 cité dans
la demande**

# EP 0 681 690 B1

## Description

L'invention concerne un dispositif magnétomécanique permettant la mesure du couple transmis par un arbre de rotation ou un élément mécanique analogue. Ce dispositif trouve son application partout où l'on juge nécessaire de mesurer le couple de torsion s'appliquant sur un arbre. Il trouve une application particulièrement intéressante dans le domaine des engins de transport motorisés, plus particulièrement dans le domaine automobile, par exemple appliqué à la colonne de direction d'un véhicule muni d'une direction assistée. On peut encore citer tous les arbres moteurs et les arbres industriels en général.

Le couple est une grandeur intéressante à bien des égards. En effet, cette grandeur permet de connaître les sollicitations mécaniques auxquelles sont soumis l'arbre de transmission ainsi que les systèmes en amont et en aval de l'arbre. De plus, sa connaissance permet de déduire l'accélération du système et même la puissance transmise par l'arbre. Dans ce dernier cas, il faut bien sûr connaître la vitesse de rotation de l'arbre, mais c'est une grandeur aisée à mesurer.

Il existe déjà un certain nombre de dispositifs permettant d'accéder à l'information de couple.

Le principe général découle des lois de la physique. Le couple appliqué à un arbre provoque une déformation angulaire, une torsion de cet arbre, et la torsion est proportionnelle au couple.

Pour un segment de l'arbre compris entre des sections A et B, l'angle de la torsion résultante entre A et B est proportionnel à la distance entre A et B et au couple transmis et, de plus, dépend de la section de l'arbre ainsi que de son matériau constitutif.

Certains capteurs de couple utilisent deux capteurs de position angulaire placés respectivement en A et B. La différence des angles mesurés donne l'angle de torsion. Cet angle est toujours petit, donc les capteurs de position doivent avoir une très grande précision. Quelle que soit leur technologie, de tels capteurs de couple sont nécessairement coûteux et assez fragiles.

Certains couplemètres fonctionnant sur ce principe ont accès à la différence de position angulaire en mesurant le déphasage entre deux trains d'ondes, élaborés par un moyen en A et un autre en B. Ces moyens peuvent être par exemple deux disques rotoriques dentés avec en regard deux couronnes statoriques dentées portant un bobinage (brevet FR-A-1 542 815). L'électronique de traitement associée est alors assez complexe et la qualité du résultat dépend de la vitesse et diminue avec elle, rendant même impossible la mesure à l'arrêt. Cela est le cas pour tous les systèmes délivrant une information modulée par la vitesse de rotation.

Le couplemètre proposé dans le brevet FR-2 631 702 avec deux rotors dentés à chaque bout d'arbre et placés en regard d'un stator muni d'enroulements d'électro-aimants, et avec un circuit magnétique excité par des aimants pour former une machine homopolaire, permet, par la mesure de l'intensité du courant dans des circuits formés par les enroulements du stator, d'accéder à une information sur le couple qui est alors peu sensible à la vitesse. Toutefois, la complexité de la mise en oeuvre des bobinages statoriques et de l'électronique associée rend de telles solutions peu attrayantes.

Le dispositif décrit dans la demande de brevet DE-A-40 38 808, qui comporte un système de deux roues dentées en vis-à-vis à chaque extrémité de la partie torsible, utilise comme détecteur deux bobines connectées en pont. Ces deux bobines sont alimentées par une tension alternative et la tension du point milieu est modulée en amplitude par la position relative des dents, donc par le couple. Le calcul du couple lui-même se fait donc par l'intermédiaire d'une opération de démodulation synchrone, qui est un traitement électronique complexe. D'autres capteurs utilisent des jauges de déformation fixées directement sur l'arbre. De telles solutions nécessitent des dispositifs permettant d'alimenter des éléments sensibles rotoriques et également d'extraire l'information des parties mobiles vers les parties fixes. Ces dispositifs présentent généralement des pièces d'usure, ce qui n'est souhaitable ni pour la durée de vie, ni pour la fiabilité.

Un dispositif comparable à celui de la demande DE-A-40 38 808 utilisant des bobines connectées en pont est également décrit dans la demande de brevet DE-A-35 32 351.

La demande de brevet japonais JP-A-58 167 934 décrit un dispositif appartenant à la famille des capteurs utilisant une pièce torsible très souple pour mesurer des angles de torsion importants. Le couple est transmis par un ressort solénoïdal et le dispositif de mesure utilise la variation de réluctance d'un système de denture sous l'effet d'un angle de torsion relatif. La variation relative autour de la position de référence est faible et limite la précision de la mesure.

Le brevet US n° 4 984 474 n'utilise pas la variation d'entrefer de deux pièces en regard. Le dispositif décrit utilise un aimant multipolaire dont les flux de fuite sont canalisés par des dents.

Les inventeurs ont déjà décrit un dispositif dans le document "Variable magnetic circuit torque sensor" Journal of Applied Physics 70 (10), 15 novembre 1991 pages 6630 à 6632 et dans J. of Magnetism and Magnetic Materials 104-107 (1992) pages 1109 à 1110. Ce dispositif comporte deux couronnes dentées se déplaçant l'une par rapport à l'autre sous l'action d'un coupie et modifiant ainsi un circuit magnétique. La source de champ est un aimant dont l'aimantation varie avec le couple. L'information se déduit d'une mesure d'induction dans un entrefer plan à l'aide d'un système galvanomagnétique (sonde à effet Hall par exemple). La sonde voit une induction B qui varie autour d'une

valeur moyenne $\bar{B}$ lorsque la réluctance R du circuit magnétique varie. Etant donnée la plage de variations possibles de la réluctance, les variations relatives d'induction qui en découlent ne dépassent guère 10% ( $\Delta B / \bar{B} = 10\%$). On est donc confronté au problème de détecter des variations assez faibles autour d'une valeur moyenne non nulle (typiquement : si $\bar{B} = 10$ mT alors par exemple 9,5 mT < B mesuré < 10,5 mT, ce qui correspond à une plage de variation de $\Delta B = 1$ mT).

A cela s'ajoute un autre problème, qui est celui des dérives thermiques. L'aimant est en effet sensible à la température et son aimantation peut varier. Si, par exemple, celle-ci varie de telle façon que la valeur moyenne de l'induction varie de 1% - donc passe de 10 mT à 10,1 mT - cette variation représente en fait une variation du signal de 10% par rapport à l'étendue de la plage de mesure (0,1 mT / 1 mT). Cela est donc néfaste à l'élaboration d'une information correcte.

La présente invention a donc pour objectif de perfectionner ce dispositif à circuit magnétique de manière à remédier aux inconvénients qui y sont liés.

Un autre objectif de l'invention est de fournir un tel dispositif perfectionné délivrant un signal continu dont la valeur soit l'image du couple et, de préférence, soit directement proportionnelle au couple.

Un autre objectif encore de l'invention est de fournir un tel dispositif qui soit indépendant de la vitesse de rotation de l'arbre.

Un autre objectif encore de l'invention est de fournir un tel dispositif qui soit particulièrement fiable, précis et compact, tout en étant peu onéreux et facile à fabriquer.

La présente invention a ainsi pour objet un dispositif pour la mesure du couple de torsion s'exerçant sur un arbre ou un élément mécanique analogue, muni d'un circuit magnétique, essentiellement cylindrique et disposé autour de l'arbre, qui comprend un aimant permanent et, au rotor, un entrefer variable ayant deux parties relatives en regard rendues chacune solidaires de l'arbre en des emplacements décalés l'un de l'autre dans la direction longitudinale de l'arbre, de telle manière qu'une torsion de l'arbre entraîne une modification de l'entrefer qui diffère selon le sens du couple exercé, et des moyens de mesure de la modification ainsi produite, caractérisé en ce qu'il comporte deux circuits magnétiques qui sont munis chacun d'au moins un aimant permanent engendrant un flux magnétique et d'un entrefer variable et qui sont disposés en des emplacements décalés sur l'arbre dans la direction longitudinale de celui-ci et en ce que ces deux circuits magnétiques comportent une partie centrale commune de culasse dans laquelle les flux magnétiques de chacun des circuits passent en sens contraires et à laquelle est associé au moins un moyen de mesure sensible à la somme algébrique des flux magnétiques.

Le dispositif selon l'invention est remarquable par le fait qu'il fournit directement, au moyen de mesure, une valeur différentielle. La partie commune aux deux circuits permet aux flux de chacun de se retrancher pour donner une mesure différentielle. Cette partie commune de culasse se définit par l'existence d'une zone commune aux deux circuits et conductrice de flux, permettant aux deux flux de se combiner. Le moyen de mesure est un capteur sensible à la valeur de flux résultant et à son sens, donc à la somme algébrique des flux. Un seul moyen de mesure suffit donc à l'obtention de la valeur différentielle de couple, même si d'autres moyens de mesure complémentaires peuvent être prévus sur le dispositif conforme à l'invention.

De plus, et cela est très avantageux, une telle structure permet de s'affranchir au premier ordre des effets des dérives, en particulier des dérives thermiques. Les aimants sont en effet sensibles à la température et leur aimantation peut varier. Dans l'invention, les champs magnétiques étant de sens contraires à l'endroit où se fait la mesure, les variations d'aimantation qui peuvent intervenir se retranchent.

De préférence, les parties déterminant les entrefers sont agencées de manière que les deux entrefers soient modifiés différemment lorsqu'un couple s'exerce sur l'arbre, l'application d'un couple d'un premier sens entraînant une augmentation de la réluctance d'un entrefer et une diminution pour l'autre, et inversement pour un couple de sens contraire, ce qui permet d'effectuer une mesure différentielle. Pour cela, les parties formant un entrefer ont une position initiale qui n'est pas symétrique par rapport à un plan séparant ces parties. De préférence encore, les deux entrefers présentent une symétrie l'un par rapport à l'autre. Par symétrie des entrefers l'un par rapport à l'autre, on entend des entrefers équivalents, ce qui peut notamment être obtenu par des entrefers dont les géométries présentent une symétrie ou une symétrie inverse, alignée ou décalée angulairement.

De manière préférée, les entrefers sont conçus pour que, en l'absence de couple s'exerçant sur l'arbre, le moyen de mesure lit une valeur de référence zéro (correspondant à des flux égaux dans les deux circuits) de part et d'autre de laquelle s'inscrivent les valeurs croissantes de couple correspondant aux couples s'exerçant dans un sens, respectivement dans l'autre sens.

Il peut être avantageusement prévu des moyens pour régler de manière précise le flux à zéro. On peut notamment recourir à tous les moyens connus en soi destinés à accroître ou diminuer la puissance de chaque aimant, en particulier les shunts magnétiques.

Cette structure est telle que l'induction vue par le moyen de mesure varie autour d'une valeur de référence nulle, tout en restant toujours indépendante de la vitesse de rotation. Cela est très avantageux dans ce sens notamment que cela facilite le traitement électronique et permet d'avoir des variations relatives d'induction beaucoup plus grandes et donc d'augmenter la largeur de la plage de mesure.

Le dispositif conforme à l'invention peut aussi comprendre des moyens permettant de régler, notamment angulairement, la position des parties formant les entrefers. Notamment, si une autre valeur de couple présente un intérêt particulier, il est possible de modifier l'entrefer en décalant angulairement les parties respectives de telle manière que ces parties soient symétriques d'un entrefer à l'autre (symétrie des entrefers l'un par rapport à l'autre) pour cette valeur particulière de couple qui correspond alors à une valeur zéro de l'information, c'est-à-dire à une résultante de flux nulle. Bien entendu, le dispositif de mesure peut être spécialement conçu pour présenter d'origine une valeur zézo pour une telle valeur de couple particulière.

Le stator des deux circuits magnétiques peut être avantageusement formé d'un seul tenant avec une culasse centrale commune à laquelle il est avantageux d'associer le moyen de mesure.

De préférence, les parties déterminant un entrefer s'étendent suivant une forme de couronne concentriquement à l'axe de l'arbre. Les parties d'un même entrefer peuvent notamment s'inscrire dans des plans orthogonaux à l'arbre qui sont différents, c'est-à-dire décalés et parallèles entre eux, ou toutes les deux dans un même plan orthogonal à l'arbre, donc radialement sur des cercles concentriques de rayons différents.

Suivant le mode de réalisation préféré de l'invention, les entrefers sont formes chacun, d'un jeu de dentures s'étendant suivant une forme de couronne à faible distance de l'arbre. Les dentures peuvent avoir toute forme géométrique appropriée, en particulier carrée, rectangulaire, trapézoïdale ou délimitée par des arcs de cercle. De préférence, la largeur des dents est comprise entre 20 et 35 % du pas des dents et plus particulièrement entre 25 et 30 % environ.

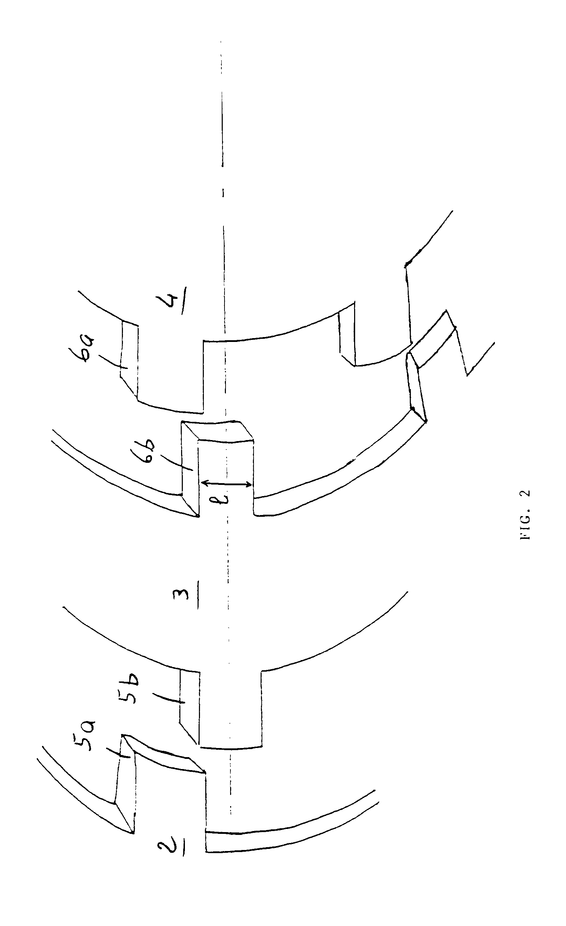

Pour assurer la position initiale non symétrique des parties déterminant les entrefers, les dents opposées formant un entrefer sont décalées angulairement comme cela est notamment décrit plus en détail plus loin au regard de la figure 2.

Les aimants permanents peuvent être placés au rotor comme au stator, en fonction par exemple des choix ou des contraintes techniques. Ils peuvent être des aimants cylindriques d'un seul tenant ou être constitués chacun d'une pluralité d'aimants individuels équivalents, notamment de mêmes longueurs et d'aimantations parallèles au sein de chaque groupe. On peut avantageusement associer à ces aimants les moyens de réglage permettant d'équilibrer le dispositif en l'absence de couple de manière à rendre nul le flux dans la culasse centrale.

Les parties déterminant les entrefers, notamment les dentures, peuvent être fixées à l'arbre par l'intermédiaire de culasses rotoriques, éventuellement séparées de l'arbre par des entretoises, notamment des entretoires amagnétiques, des culasses statoriques étant disposées face aux culasses rotoriques. Si besoin est, on peut prévoir de pratiquer des évidements dans les régions de l'arbre qui sont en regard des culasses rotoriques et sont délimitées par les entretoises amagnétiques.

Les aimants peuvent être portés au stator par trois culasses statoriques, deux d'extrémité et une centrale, qui sont associées à trois culasses rotoriques, deux d'extrémité et une centrale.

En variante, le dispositif peut comprendre une culasse statorique unique placée en regard des culasses rotoriques, notamment au nombre de cinq, qui portent alors les aimants.

Les largeurs respectives des culasses en vis-à-vis peuvent être choisies différentes pour limiter l'influence, sur la mesure, des jeux axiaux entre rotor et stator.

Le moyen de mesure peut être avantageusement un moyen galvanométrique choisi parmi le groupe constitué par les sondes à effet Hall, les magnétorésistances et les moyens analogues.

L'invention va être maintenant décrite plus en détail à l'aide de modes de réalisation non limitatifs se référant aux dessins annexés.


BREVE DESCRIPTION DES DESSINS

- la figure 1 présente une vue en coupe partielle suivant la direction longitudinale de l'arbre, d'un premier mode de réalisation de l'invention;
- la figure 2 est une vue schématique de deux jeux de dentures du dispositif de la figure 1, au repos;
- la figure 3 est une vue analogue à celle de la figure 2, mais en présence d'un couple s'exerçant sur l'arbre;
- les figures 4 et 5 présentent deux autres modes de réalisation de l'invention, dans une représentation analogue à celle de la figure 1;
- les figures 6 à 9 représentent schématiquement en vue développée des profils de dentures selon quatre variantes ;
- la figure 10 représente schématiquement et en perspective un mode de réalisation particulier d'un rotor réalisé en deux parties symétriques ;
- la figure 11 représente schématiquement et en perspective le stator, également en deux parties, associé au rotor de la figure 10 ; et
- la figure 12 représente le schéma électrique du circuit magnétique selon la figure 1, dans un plan axial.

DESCRIPTION DETAILLEE

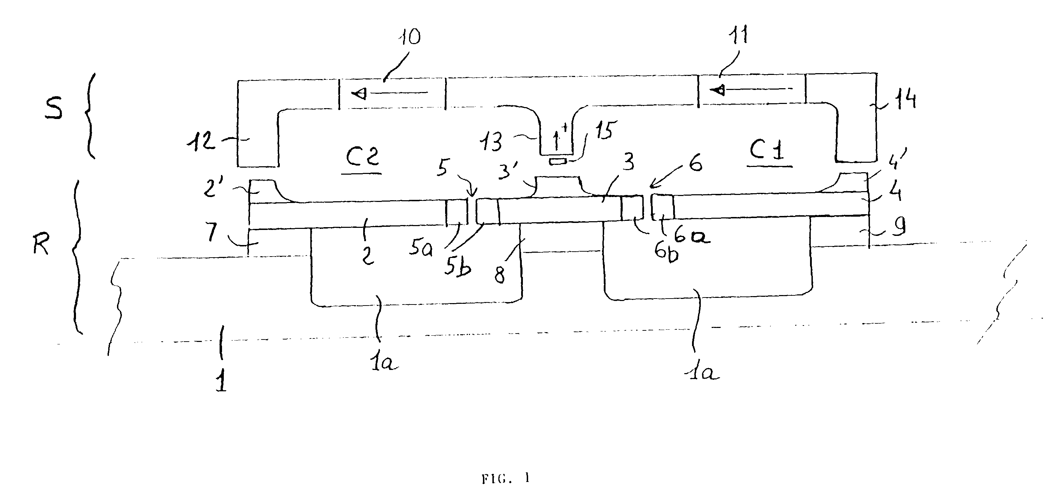

A la figure 1, il est représenté une section d'un arbre de torsion 1 sur lequel est monté un dispositif conforme à un premier mode de réalisation de l'invention. Pour des raisons de clarté, on a fait figurer sur l'arbre des évidements 1a de manière à bien faire comprendre les phénomènes de torsion en différents points de l'arbre. Ils ne sont pas indispensables, mais, dans certains cas, on peut souhaiter accroître l'aptitude à la torsion et des évidements de ce type peuvent alors être prévus.

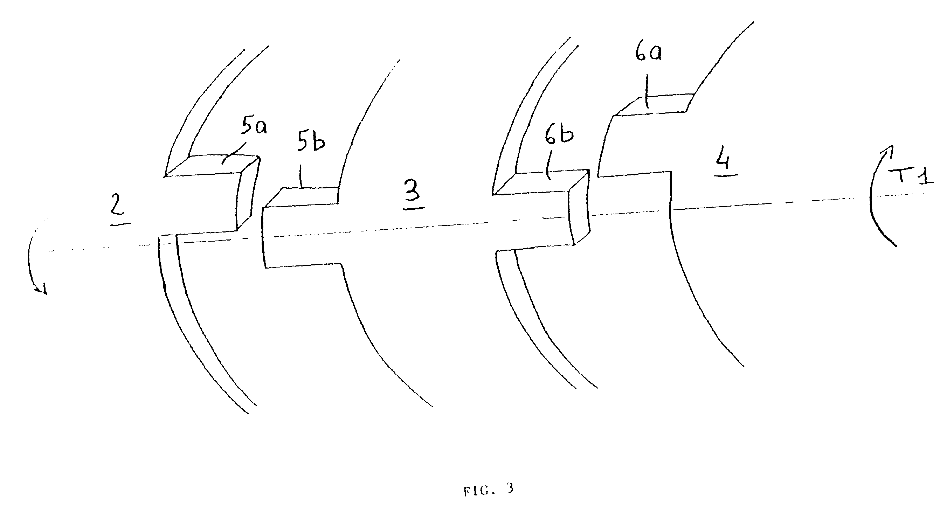

Ce dispositif comprend, au rotor, trois éléments 2, 3 et 4 de circuit magnétique (ci-après culasses rotoriques ; incorporant des parties de culasse 2', 3' et 4') fixés sur l'arbre 1 suivant une disposition cylindrique autour de celui-ci, par l'intermédiaire d'entretoises amagnétiques 7, 8 et 9, formant le circuit magnétique au rotor désigné par le repère R. La fixation peut par exemple être assurée par des goupilles ou des moyens analogues. Les culasses rotoriques 2 et 3, respectivement 3 et 4 sont séparées par un jeu de dentures 5, respectivement 6, qui seront décrits en détail plus loin en liaison avec les figures 2 et 3. Le stator du dispositif comporte un circuit magnétique cylindrique S (pour circuit magnétique au stator), possédant deux aimants permanents 10 et 11 et trois culasses statoriques 12, 13 et 14. Les éléments constitutifs 4, 14, 11, 13, 3, 6, respectivement 2, 5, 3, 13, 10, 12, déterminent un premier circuit magnétique C1 et un deuxième circuit magnétique C2 de sens opposés dans la zone des culasses centrales 3 et 13. On remarque que les éléments constitutifs 3 et 13 leur sont communs. Un moyen magnétosensible 15 (par exemple sonde de Hall ou magnétorésistance) est fixé sur la culasse centrale commune 13 (culasse statorique). Ce moyen est sensible à la résultante des flux des deux circuits.

On voit sur la figure 1 que les surfaces en vis-à-vis des culasses 12, 13, 14 et des parties de culasse 2', 3', 4' respectivement ont des largeurs différentes afin de limiter l'influence, sur la mesure, des jeux axiaux entre rotor et stator.

La figure 2 représente schématiquement les deux entrefers délimités par les jeux de dentures 5 et 6, en montrant une série de dents 5a, 5b pour le circuit C2 et 6a, 6b pour le circuit C1, leur forme géométrique et leurs dispositions respectives dans l'espace.

Les dents sont ici carrées mais peuvent être de toute forme appropriée. Au repos, c'est-à-dire en l'absence de couple, les dents 5a et 6a sont décalées angulairement d'une manière identique par rapport aux dents alignées 5b et 6b portées par la culasse rotorique centrale 3. Dans cette position, les entrefers sont rigoureusement identiques (symétriques); les champs créés par les aimants 10 et 11 ont des sens opposés dans la culasse centrale commune 13 et leurs flux s'annulent. Le moyen de mesure 15 détecte donc une valeur nulle. Il peut être judicieux d'associer, aux aimants, des moyens de réglage connus en soi (non représentés), par exemple des shunts magnétiques, permettant d'équilibrer le dispositif pour obtenir, avant une mesure, une valeur rigoureusement nulle de flux. Ces moyens servent donc à rendre égaux les flux générés dans C1 et C2 en l'absence de couple.

Comme cela est montré par une flèche dans la culasse centrale commune 13, on a choisi arbitrairement un sens positif de flux qui correspond au sens du champ créé par l'aimant 10 dans C2 s'il est considéré tout seul.

A la figure 3, un couple de torsion est exercé sur l'arbre 1 dans le sens indiqué par la flèche T1. Le décalage angulaire des dents 5a et 6a par rapport aux dents 5b et 6b (qui est initialement identique) est modifié et cela de manière différente, c'est-à-dire d'une manière plus poussée pour les dents les plus proches du point d'application du couple, en l'occurence les dents 6a par rapport aux dents 6b. Cela se traduit ici par une ouverture plus grande de l'entrefer de C1 par rapport à celui de C2. La réluctance de C1 s'accroît alors que celle de C2 diminue et le flux résultant dans la culasse centrale commune 13 passe dans le sens positif. Le moyen de mesure 15 détecte ce sens positif ainsi que la valeur résultante du flux qui est une fonction du couple.

Si le couple est exercé en sens contraire, on comprend immédiatement que l'entrefer de C1 se ferme alors que celui de C2 s'ouvre, ce qui se traduit par une diminution de la réluctance de C1 et une augmentation de celle de C2. Le flux résultant sera alors de sens négatif.

Les dimensions et formes des dentures sont avantageusement choisies de manière que les variations des réluctances génèrent dans la culasse centrale commune 13 un flux proportionnel à l'angle de torsion, donc au couple.

La largeur l des dents (voir la figure 2) est de préférence comprise entre 20 et 35 % environ du pas des dents, et plus particulièrement entre 25 et 30 % environ. D'autre part, le spécialiste sait parfaitement adapter les dentures en fonction de l'étendue de la plage de mesure et de la précision de mesure recherchées. Il sait par exemple que la précision de mesure augmente avec le nombre de dents, tandis que dans le même temps diminue l'étendue de la plage de mesure.

Comme moyen de mesure, on utilise de préférence une sonde de Hall linéaire grâce à laquelle on obtient un signal électrique proportionnel au couple exercé.

La relation entre le couple appliqué C et l'angle de torsion $\alpha$ est :

$$\alpha = \frac{L}{GJ} \, C$$

G = module d'élasticité transverse de l'arbre

J = moment d'inertie

L = distance des deux points de l'arbre entre lesquels on considère que le couple est appliqué.

La déformation des arbres est en général de l'ordre de quelques degrés, notamment comprise entre 1° et 5°. Il s'agit d'une constante assez générale dans la conception des arbres, qui tient compte des dimensions et caractéristiques mécaniques des arbres en fonction de la puissance à transmettre.

Le dispositif de mesure selon l'invention sera aisément adapté en dimensions à tout type d'arbre de manière à présenter une sensibilité de l'ordre du degré, notamment comprise entre 1° et 5° environ dans les conditions d'emploi de l'arbre.

La longueur adéquate (c'est-à-dire la distance séparant les points de fixation des entretoises 7 et 9) du dispositif de mesure est notamment déterminée, pour un arbre donné, par la longueur d'arbre correspondant à la sensibilité choisie, par exemple à une torsion comprise entre 1° et 5°. Il s'agit là de paramètres parfaitement connus des spécialistes.

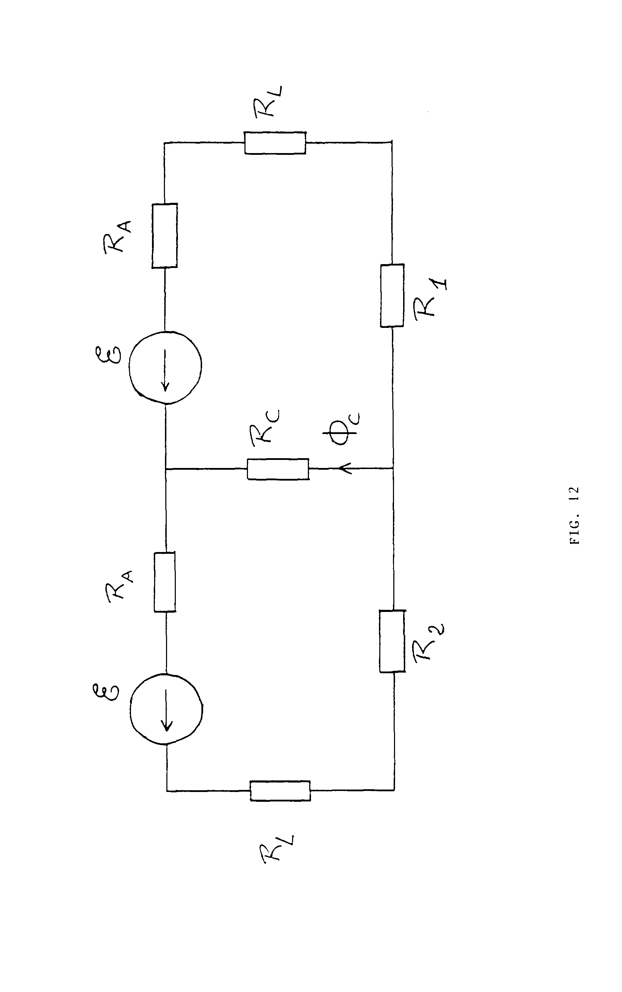

Le flux magnétique $\phi_c$ dans l'entrefer central formé entre les parties 3, 3' et 13, lu par le moyen de mesure 15, est donné par la formule suivante, par référence au schéma électrique de la figure 12 :

$$\phi_c = \frac{\varepsilon \, (R_1 - R_2)}{(R_L + R_A + R_1)(R_L + R_A + R_2)+ R_C \, [2 \, (R_L + R_A)+ R_1 + R_2]}$$

dans laquelle :

$\varepsilon$ = force magnétomotrice de l'aimant

$R_A$ = réluctance de l'aimant

$R_L$ = réluctance de l'entrefer latéral de transfert

$R_C$ = réluctance de l'entrefer central

$R_1$ = réluctance équivalente d'un système denté

$R_2$ = réluctance équivalente de l'autre système denté

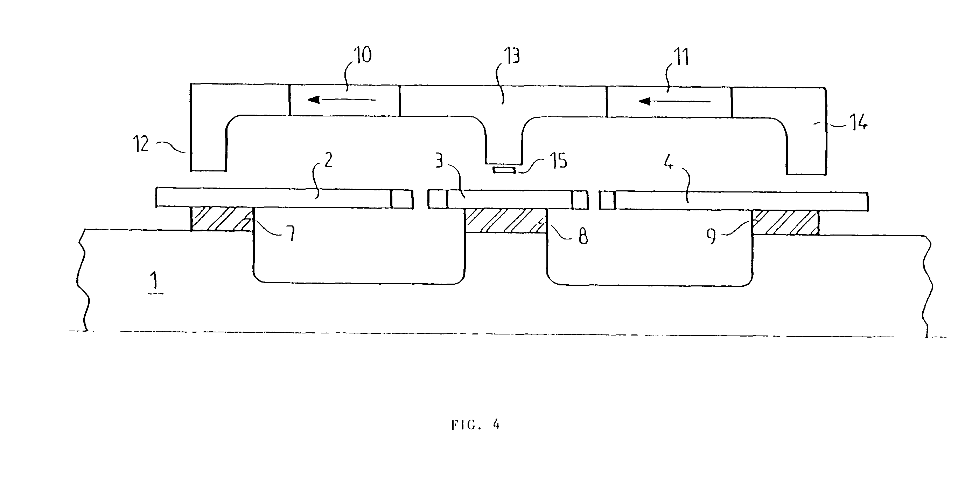

La figure 4 présente une variante de réalisation qui diffère du mode de réalisation précédent par le fait que les circuits sont simplifiés par la suppression des parties de culasse repérées 2', 3' et 4' à la figure 1. Les surfaces de culasses en vis-à-vis sont là aussi de dimensions différentes, ce qui limite l'influence, sur la mesure, des jeux axiaux entre rotor et stator.

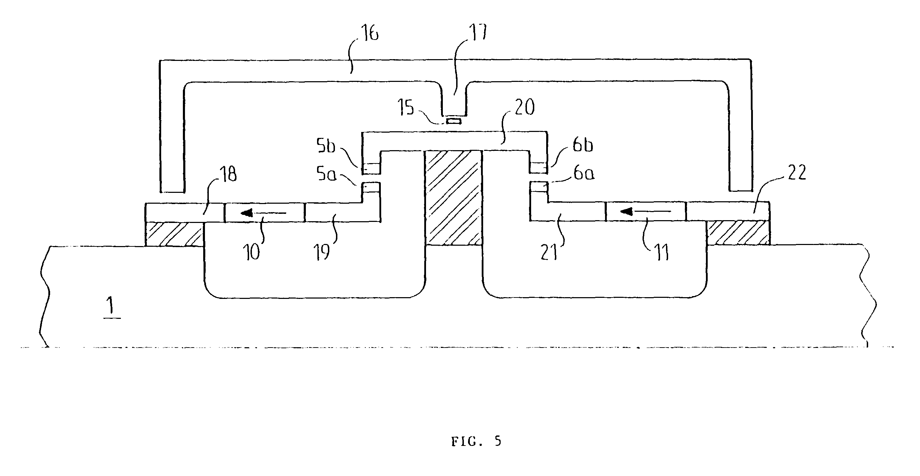

La figure 5 présente une autre variante dans laquelle les aimants 10 et 11 sont placés au rotor, le stator est constitué par une culasse unique 16 présentant la partie centrale de culasse 17, qui correspond à la culasse commune 13 de la figure 1, et les dentures de chaque circuit sont dites radiales, c'est-à-dire disposées concentriquement sur des plans coupant transversalement l'arbre. La partie au rotor comprend trois parties, deux d'extrémité comportant chacune deux culasses 18, 19 et 21, 22 entourant un aimant 10 ou 11 et présentant à une extrémité les dentures 5a, respectivement 6a orientées radialement vers l'extérieur, et une partie centrale formant culasse centrale 20 et présentant les dentures 5b et 6b dirigées radialement vers les dentures 5a, respectivement 6a. Le fonctionnement de ce mode de réalisation peut immédiatement être déduit de celui décrit pour le mode de réalisation de la figure 1 et n'a donc pas besoin d'être décrit ici plus en détail.

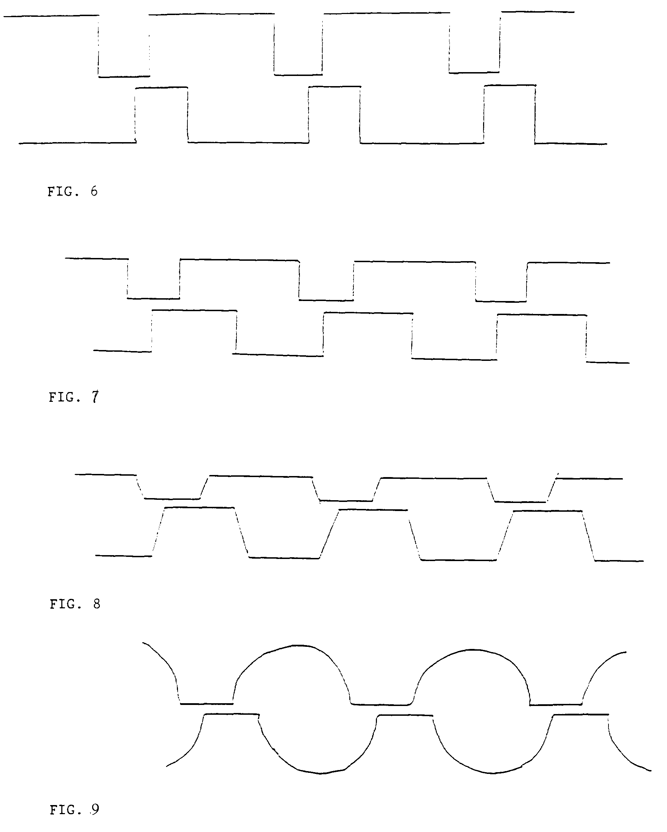

Les figures 6 à 9 présentent des variantes de réalisation des dentures selon l'invention, rectangulaires aux figures 6 et 7, trapézoïdales à la figure 8 et en forme d'arcs de cercles à la figure 9.

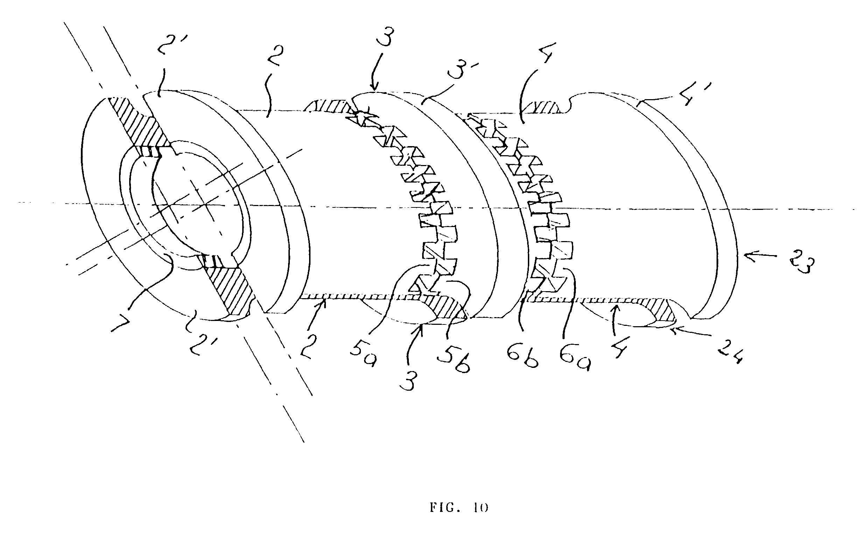

La figure 10 montre en perspective un circuit au rotor formé de deux ensembles 23 et 24 symétriques par rapport à un plan passant par l'axe de l'arbre (non représenté) et venant se fixer sur cet arbre. Mis à part la constitution en deux parties, la structure est identique à celle de la figure 1 et les repères numériques restent les mêmes. L'ensemble 24 comprend également les jeux de denture même si ceux-ci ne sont pas visibles sur la figure.

A noter que sur cette figure les positions respectives des dentures ne sont pas représentées avec précision. A ce sujet, les figures 2 et 3 sont les figures de référence.

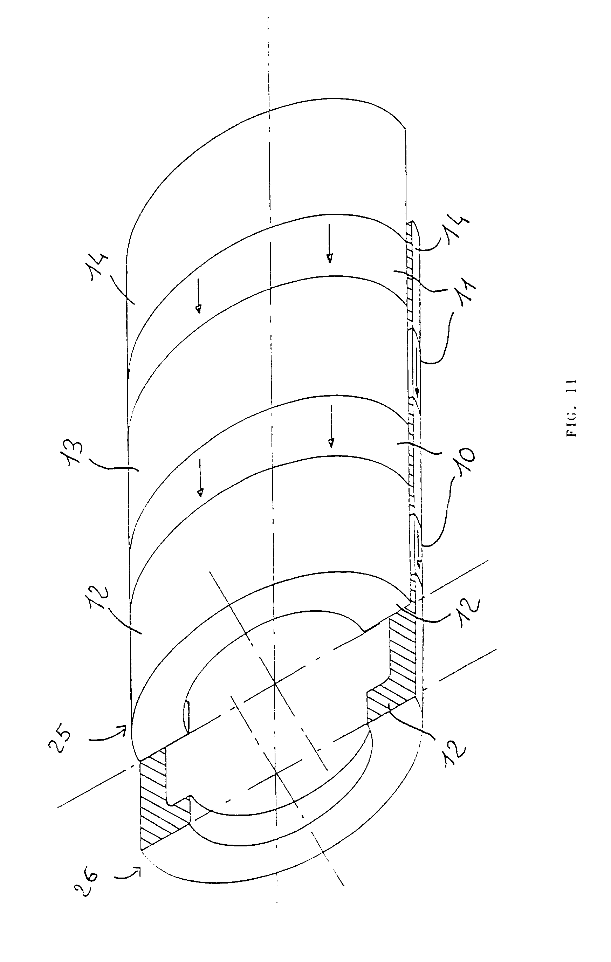

A la figure 11, on voit le circuit au stator formé de deux parties symétriques 25 et 26 qui sont destinées à venir au regard des parties 23 et 24 du circuit au rotor de la figure 10. Mis à part la constitution en deux parties, la structure est identique à celle de la figure 1 et les repères numériques restent les mêmes.

Les ensembles cylindriques constituant les dispositifs de mesure conformes à l'invention peuvent notamment se présenter sous la forme de manchons en deux ou trois parties.

**Revendications**

1.  Dispositif pour la mesure du couple de torsion s'exerçant sur un arbre (1) ou un élément mécanique analogue, muni d'un circuit magnétique ou stator (S), essentiellement cylindrique et disposé autour de l'arbre, qui comprend un aimant permanent et, au rotor (R), un entrefer variable ayant deux parties relatives en regard rendues chacune solidaires de l'arbre en des emplacements respectifs décalés l'un de l'autre dans la direction longitudinale de l'arbre, de telle manière qu'une torsion de l'arbre entraîne une modification de l'entrefer qui diffère selon le sens du couple exercé, et des moyens de mesure de la modification de l'entrefer ainsi produite, caractérisé en ce qu'il comporte deux circuits magnétiques (C1, C2) qui sont munis chacun d'au moins un aimant permanent (10, 11) engendrant un flux magnétique et d'un entrefer variable et qui sont disposés en des emplacements décalés sur l'arbre (1) dans la direction longitudinale de celui-ci et en ce que ces deux circuits magnétiques (C1, C2) comportent une partie centrale commune (13) de culasse dans laquelle les flux magnétiques de chacun des circuits passent en sens contraires et à laquelle est associé au moins un moyen de mesure (15) sensible à la somme algébrique des flux magnétiques.

2.  Dispositif selon la revendication 1, caractérisé en ce que les parties (5a, 5b; 6a, 6b) déterminant un entrefer ont une position initiale qui n'est pas symétrique, de telle manière que les deux entrefers sont modifiés différemment lorsqu'un couple s'exerce sur l'arbre (1), l'application d'un couple d'un premier sens entraînant une augmentation de la réluctance d'un entrefer et une diminution pour l'autre entrefer, et inversement pour un couple de sens contraire.

3.  Dispositif selon la revendication 1 ou 2, caractérisé en ce que les entrefers sont conçus ou réglés pour que, en l'absence de couple s'exerçant sur l'arbre (1), le moyen de mesure (15) lit une valeur de référence zéro de part et d'autre de laquelle s'inscrivent les valeurs croissantes de couple correspondant aux couples s'exerçant dans un sens, respectivement dans l'autre sens.

4.  Dispositif selon l'une quelconque des revendications 1 à 3, caractérisé en ce que les entrefers sont conçus ou réglés pour que, pour un certain couple s'exerçant sur l'arbre (1), le moyen de mesure (15) lit une valeur de référence zéro.

5.  Dispositif selon l'une quelconque des revendications 1 à 4, caractérisé en ce que le stator (S) des deux circuits magnétiques est formé d'un seul tenant avec une culasse centrale commune (13) et en ce que le moyen de mesure (15) est associé à cette culasse centrale.

6.  Dispositif selon l'une quelconque ces revendications 1 à 5, caractérisé en ce que les parties (5a, 5b; 6a, 6b) déterminant un entrefer s'étendent suivant une forme de couronne concentriquement à l'axe de l'arbre (1).

7.  Dispositif selon la revendication 6, caractérisé en ce que lesdites parties (5a, 5b; 6a, 6b) s'inscrivent dans des plans orthogonaux à l'arbre (1) qui sont différents.

8.  Dispositif selon la revendication 6, caractérise en ce que lesdites parties (5a, 5b; 6a, 6b) s'inscrivent dans un même plan orthogonal à l'arbre (1).

9.  Dispositif selon l'un quelconque des revendications 1 à 8, caractérisé en ce que les entrefers sont formés chacun d'un jeu de dentures (5a, 5b; 6a, 6b) s'étendant suivant une forme de couronne à faible distance de l'arbre (1).

10.  Dispositif selon l'une quelconque des revendications 1 à 9, caractérisé en ce que les aimants (10, 11) sont placés au stator (S).

11.  Dispositif selon l'une quelconque des revendications 1 à 9, caractérisé en ce que les aimants (10, 11) sont placés au rotor (R).

12.  Dispositif selon l'une quelconque des revendications 1 à 11, caractérisé en ce que les aimants permanents (10, 11) sont des aimants cylindriques d'un seul tenant ou sont constitués chacun d'une pluralité d'aimants individuels de mêmes longueurs et d'aimantations parallèles.

13.  Dispositif selon la revendication 5 et l'une quelconque des revendications 6 à 12, caractérisé en ce que, aux aimants (10, 11), il est associé des moyens de réglage permettent d'équilibrer le dispositif en l'absence de couple de manière à rendre nul le flux dans la culasse centrale (13).

14. Dispositif selon l'une quelconque des revendications 1 à 11, caractérisé en ce que les parties (5a, 5b; 6a, 6b) déterminant les entrefers sont fixées à l'arbre par l'intermédiaire de culasses rotoriques (2, 3, 4), éventuellement séparées de l'arbre (1) par des entretoises amagnétiques (7, 8, 9), des culasses statoriques (12, 13, 14) étant disposées en vis-à-vis des culasses rotoriques.

15. Dispositif selon l'ensemble des revendications 5, 10 et 14, caractérisé en ce que les aimants (10, 11) sont portés au stator (S) par trois culasses statoriques, deux d'extrémité (12, 14) et une centrale (13), qui sont associées à trois culasses rotoriques, deux d'extrémité (2, 4) et une centrale (3).

16. Dispositif selon l'ensemble des revendications 5, 11 et 14, caractérisé en ce qu'il comprend une culasse statorique (16) unique placée en regard de quatre culasses rotoriques (18 à 22) portant les aimants (10, 11).

17. Dispositif selon la revendication 15, caractérisé en ce que les largeurs respectives des culasses en vis-à-vis sont choisies différentes de manière à limiter l'influence, sur la mesure, des jeux axiaux entre rotor et stator.

18. Dispositif selon la revendication 9, caractérisé en ce que les dents des dentures ont une forme carrée, rectangulaire, trapézoïdale ou délimitée par des arcs de cercle.

19. Dispositif selon l'une quelconque des revendications 1 à 18, caractérisé en ce que le moyen de mesure (15) est choisi parmi le groupe constitué par les sondes de Hall, les magnétorésistances et les moyens analogues.

## Patentansprüche

1. Vorrichtung zum Messen des auf eine Welle (1) oder ein analoges mechanisches Element ausgeübten Torsionsmoments, die versehen ist mit einem Magnetkreis oder Stator (S), der im wesentlichen zylindrisch und um die Welle angeordnet ist und einen Permanentmagneten sowie am Rotor (R) einen veränderlichen Luftspalt enthält, der zwei einander gegenüber befindliche Teile hat, die jeweils an in Längsrichtung der Welle zueinander versetzten Stellen mit der Welle verbunden sind, so daß eine Torsion der Welle eine Veränderung des Luftspalts zur Folge hat, die je nach Richtungssinn des ausgeübten Moments unterschiedlich ist, sowie mit Mitteln zum Messen der Veränderung des in dieser Weise erzeugten Luftspalts, dadurch gekennzeichnet, daß sie zwei Magnetkreise (C1, C2) enthält, die jeweils wenigstens einen Permanentmagneten (10, 11), der einen magnetischen Fluß erzeugt, sowie einen veränderlichen Luftspalt aufweisen und an der Welle an in Längsrichtung der Welle (1) versetzten Stellen angeordnet sind, und daß diese zwei Magnetkreise (C1, C2) einen gemeinsamen Joch-Mittelteil enthalten, durch den die magnetischen Flüsse jedes der Kreise in entgegengesetzten Richtungen verlaufen und dem wenigstens ein Meßmittel (15) zugeordnet ist, das auf die algebraische Summe der magnetischen Flüsse anspricht.

2. Vorrichtung nach Anspruch 1, dadurch gekennzeichnet, daß die Teile (5a, 5b; 6a, 6b), die einen Luftspalt bestimmen, eine Anfangsposition besitzen, die nicht symmetrisch ist, so daß die zwei Luftspalte unterschiedlich verändert werden, wenn auf die Welle (1) ein Moment ausgeübt wird, wobei die Anwendung eines Moments in einem ersten Richtungssinn eine Erhöhung der Reluktanz eines Luftspalts und deren Verringerung im anderen Luftspalt erzeugt, und umgekehrt für ein Moment mit entgegengesetztem Richtungssinn.

3. Vorrichtung nach Anspruch 1 oder 2, dadurch gekennzeichnet, daß die Luftspalte so beschaffen sind oder geregelt werden, daß bei Abwesenheit eines auf die Welle (1) ausgeübten Moments das Meßmittel (15) einen Referenzwert null liest, wobei beiderseits dieses Referenzwerts die wachsenden Momentenwerte aufgezeichnet werden, die den Momenten entsprechen, die im einen Richtungssinn bzw. im anderen Richtungssinn ausgeübt werden.

4. Vorrichtung nach irgendeinem der Ansprüche 1 bis 3, dadurch gekennzeichnet, daß die Luftspalte so beschaffen sind oder geregelt werden, daß für ein bestimmtes auf die Welle (1) ausgeübtes Moment das Meßmittel (15) einen Referenzwert null liest.

5. Vorrichtung nach irgendeinem der Ansprüche 1 bis 4, dadurch gekennzeichnet, daß der Stator (S) der beiden Magnetkreise mit dem gemeinsamen Mitteljoch (13) einteilig ausgebildet ist und daß das Meßmittel (15) diesem Mitteljoch zugeordnet ist.

**6.** Vorrichtung nach irgendeinem der Ansprüche 1 bis 5, dadurch gekennzeichnet, daß sich die Teile (5a, 5b; 6a, 6b), die einen Luftspalt bestimmen, kranzförmig konzentrisch um die Achse der Welle (1) erstrecken.

**7.** Vorrichtung nach Anspruch 6, dadurch gekennzeichnet, daß die Teile (5a, 5b; 6a, 6b) in zwei zur Welle (1) senkrechte, verschiedene Ebenen einbeschrieben sind.

**8.** Vorrichtung nach Anspruch 6, dadurch gekennzeichnet, daß die Teile (5a, 5b; 6a, 6b) in dieselbe zur Welle (1) senkrechte Ebene einbeschrieben sind.

**9.** Vorrichtung nach irgendeinem der Ansprüche 1 bis 8, dadurch gekennzeichnet, daß die Luftspalte jeweils aus einem Verzahnungssatz (5a, 5b; 6a, 6b) gebildet sind, der sich kranzförmig in geringem Abstand von der Welle (1) erstreckt.

**10.** Vorrichtung nach irgendeinem der Ansprüche 1 bis 9, dadurch gekennzeichnet, daß die Magneten (10, 11) am Stator (S) angeordnet sind.

**11.** Vorrichtung nach irgendeinem der Ansprüche 1 bis 9, dadurch gekennzeichnet, daß die Magneten (10, 11) am Rotor (R) angeordnet sind.

**12.** Vorrichtung nach irgendeinem der Ansprüche 1 bis 11, dadurch gekennzeichnet, daß die Permanentmagneten (10, 11) zylindrische Magneten sind, die einteilig ausgebildet sind oder jeweils aus mehreren einzelnen Magneten mit der gleichen Länge und mit parallelen Magnetisierungen gebildet sind.

**13.** Vorrichtung nach Anspruch 5 und irgendeinem der Ansprüche 6 bis 12, dadurch gekennzeichnet, daß den Magneten (10, 11) Einstellmittel zugeordnet sind, mit denen die Vorrichtung bei Abwesenheit des Moments im Gleichgewicht gehalten werden kann, so daß der Fluß im Mitteljoch (13) auf null bleibt.

**14.** Vorrichtung nach irgendeinem der Ansprüche 1 bis 11, dadurch gekennzeichnet, daß die Teile (5a, 5b; 6a, 6b), die die Luftspalte bestimmen, an der Welle über Rotor-Joche (2, 3, 4) befestigt sind, die von der Welle (1) eventuell durch nichtmagnetische Abstandshalter (7, 8, 9) getrennt sind, wobei gegenüber den Rotor-Jochen Stator-Joche (12, 13, 14) angeordnet sind.

**15.** Vorrichtung nach jedem der Ansprüche 5, 10 und 14, dadurch gekennzeichnet, daß die Magneten (10, 11) am Stator (S) von drei Stator-Jochen, d.h. zwei Endjochen (12, 14) und einem Mitteljoch (13), getragen werden, die drei Rotor-Jochen, d.h. zwei Endjochen (2, 4) und einem Mitteljoch (3), zugeordnet sind.

**16.** Vorrichtung nach jedem der Ansprüche 5, 11 und 14, dadurch gekennzeichnet, daß sie ein einziges Stator-Joch (16) enthält, das gegenüber vier Rotor-Jochen (18 bis 22), die die Magneten (10, 11) tragen, angeordnet ist.

**17.** Vorrichtung nach Anspruch 15, dadurch gekennzeichnet, daß die jeweiligen Breiten der einander gegenüberliegenden Joche unterschiedlich gewählt sind, so daß der Einfluß der Axialspiele zwischen dem Rotor und dem Stator auf die Messung begrenzt wird.

**18.** Vorrichtung nach Anspruch 9, dadurch gekennzeichnet, daß die Zähne der Verzahnungen eine quadratische, eine rechtwinklige oder eine trapezförmige Form haben oder durch Kreisbögen begrenzt sind.

**19.** Vorrichtung nach irgendeinem der Ansprüche 1 bis 18, dadurch gekennzeichnet, daß das Meßmittel (15) aus der Gruppe gewählt ist, die durch die Hall-Sonden, die Magnetowiderstände und analoge Mittel gebildet ist.

## Claims

**1.** Device for measurement of the torque exerted on a shaft (1) or a similar mechanical element, equipped with a magnetic circuit or stator (S) which is essentially cylindrical and disposed around the shaft, which comprises a permanent magnet and, on the rotor (R), a variable gap having two opposing relative parts each integral with the shaft at respective locations offset from one another in the longitudinal direction of the shaft, in such a way that torsion of the shaft leads to a modification of the gap which differs according to the direction of the torque exerted, and means for measuring the modification of the gap thus produced, characterised in that it includes two magnetic circuits (C1, C2) which are each equipped with at least one permanent magnet (10, 11) generating a magnetic flux and with a variable gap and which are disposed at locations offset on the shaft (1) in the longitudinal direction of the latter, and that these two magnetic circuits (C1, C2) have a common central yoke part (13) in which the magnetic fluxes from each of the circuits pass in opposite directions and with which is associated at least one measurement means (15) responsive to the algebraic sum of the magnetic fluxes.

2.  Device as claimed in Claim 1, characterised in that the parts (5a, 5b; 6a, 6b) determining a gap have an initial position which is not symmetrical, in such a way that the two gaps are modified differently when a torque is exerted on the shaft (1), the application of a torque from a first direction leading to an increase in the reluctance of a gap and a decrease for the other gap, and conversely for a torque from the opposite direction.

3.  Device as claimed in Claim I or 2, characterised in that the gaps are designed or adjusted so that, in the absence of a torque exerted on the shaft (1), the measurement means (15) reads a zero reference value on either side of which are recorded the increasing torque values corresponding to the torques exerted in one direction and respectively in the other direction.

4.  Device as claimed in any one of Claims 1 to 3, characterised in that the gaps are designed or adjusted so that, for a certain torque exerted on the shaft (1), the measurement means (15) reads a zero reference value.

5.  Device as claimed in any one of Claims 1 to 4, characterised in that the stator (S) of the two magnetic circuits is formed in one piece with a common central yoke (13) and that the measurement means (15) is associated with this central yoke.

6.  Device as claimed in any one Claims 1 to 5, characterised in that the parts (5a, 5b; 6a, 6b) determining a gap extend in the form of a crown concentrically with the axis of the shaft (1).

7.  Device as claimed in Claim 6, characterised in that the said parts (5a, 5b; 6a, 6b) are inscribed in planes orthogonal with the shaft (1) which are different.

8.  Device as claimed in Claim 6, characterised in that the said parts (5a, 5b; 6a, 6b) are inscribed in one and the same plane orthogonal with the shaft (1).

9.  Device as claimed in any one of Claims 1 to 8, characterised in that the gaps are each formed by a set of teeth (5a, 5b; 6a, 6b) extending in the form of a crown a small distance from the shaft (1).

10. Device as claimed in any one of Claims 1 to 9, characterised in that the magnets (10, 11) are placed on the stator (S).

11. Device as claimed in any one of Claims 1 to 9, characterised in that the magnets (10, 11) are placed on the rotor (R).

12. Device as claimed in any one of Claims 1 to 11, characterised in that the permanent magnets (10, 11) are cylindrical magnets in one piece or are each formed by a plurality of individual magnets having the same lengths and parallel magnetisations.

13. Device as claimed in Claim 5 and any one of Claims 6 to 12, characterised in that associated with the magnets (10, 11) is adjustment means which permit the device to be balanced in the absence of torque in such a way as to nullify the flux in the central yoke (13).

14. Device as claimed in any one of Claims 1 to 11, characterised in that the parts (5a, 6b; 6a, 6b) determining the gaps are fixed to the shaft by means of rotor yokes (2, 3, 4), possibly separated from the shaft (1) by non-magnetic spacers (7, 8, 9), stator yokes (12, 13, 14) being disposed opposite the rotor yokes.

15. Device as claimed in all of Claims 5, 10 and 14, characterised in that the magnets (10, 11) are borne on the stator (S) by three stator yokes, two end ones (12, 14) and a central one (13), which are associated with three rotor yokes, two end ones (2, 4) and a central one (3).

16. Device as claimed in all of Claims 5, 11 and 14, characterised in that it comprises a single stator yoke (16) placed facing four rotor yokes (18 to 22) bearing the magnets (10, 11).

17. Device as claimed in Claim 15, characterised in that the respective widths of the mutually facing yokes are chosen to be different so as to limit the influence on the measurement of the axial clearances between rotor and stator.

18. Device as claimed in Claim 9, characterised in that the teeth of the toothings have a shape which is square, rectangular, trapezoidal or delimited by arcs of a circle.

19. Device as claimed in any one of Claims 1 to 18, characterised in that the measurement means (15) is chosen from amongst the group consisting of Hall probes, magnetoresistances and similar means.

FIG. 1

FIG. 2

FIG. 3

EP 0 681 690 B1

FIG. 4

FIG. 5

FIG. 6

FIG. 7

FIG. 8

FIG. 9

FIG. 10

FIG. 11

FIG. 12